Europäisches Patentamt

European Patent Office

Office européen des brevets

(19)

(11) Publication number: **0 004 798**
A2

# EUROPEAN PATENT APPLICATION

(12)

(21) Application number: **79300621.4**

(22) Date of filing: **12.04.79**

(51) Int. Cl.²: **G 06 F 3/14**
**G 06 K 15/20, H 04 N 5/46**

(30) Priority: **12.04.78 GB 1440078**

(43) Date of publication of application:
**17.10.79 Bulletin 79/21**

(84) Designated Contracting States:
**BE DE FR NL**

(71) Applicant: **DATA RECALL LIMITED**
**Sondes Place**
**Dorking Surrey RH4 3EF(GB)**

(72) Inventor: **Jones, Mark-Eric**
**C/O. Data Recall Limited Sondes Place**
**Dorking Surrey RH4 3EF(GB)**

(74) Representative: **Jackson, David Spence et al,**
**REDDIE & GROSE 16, Theobalds Road**
**London, WC1X 8PL(GB)**

(54) Video display control apparatus.

(57) Video display control apparatus for a cathode ray display tube has an input terminal 11 for a composite video signal conveying raster synchronising information and video information. Line and frame deflection coils 12 and 13 supplied by line and frame output circuits 17 and 18 are supplied with scanning raster currents produced in response to the composite video signal. To adapt the raster to two different display formats a phase locked loop tone generator 37 receives the composite video signal and indicates by producing a binary output signal whether or not the composite video signal includes a line frequency line within the acquisition bandwidth of the generator 37, this frequency being the line frequency for one of the two display formats and another frequency which is outside the acquisition bandwidth of the generator 37 being the line frequency for the other display format. This binary signal is supplied to switches 21, 24, 28, 32 and 36 which are respectively set either open or closed in dependence on the value of the binary output signal and thus adapt the scanning raster circuitry to the component values required for one or the other format.

EP 0 004 798 A2

·/· ·

Croydon Printing Company Ltd.

- 1 -

## VIDEO DISPLAY CONTROL APPARATUS

The present invention relates to video display control apparatus for use with a visual display device employing a television-type raster, the control apparatus including an input terminal for a composite video signal conveying raster synchronising information and video information, and means for producing scanning raster signals from composite video signals supplied to the said input terminal.

Video display control apparatus of the abovementioned kind is used in, for example, computer peripheral equipment, and word processors. The visual display device is usually a cathode ray tube. The use of a visual display device such as a cathode ray tube employing a television-type raster imposes limits on the format of the display, these limits being the result of the size and shape of the raster. However, for the displaying of certain types of information such as arrays of alphanumeric characters, it is often convenient to be able to change the format of the displayed arrays so that more or fewer characters are presented in each row of the array and more or fewer rows of characters are presented in the display provided by the visual display device. Accordingly, it is an object of the present invention to provide means in apparatus of the kind mentioned initially hereinbefore to enable the format of the display to be changed in dependence upon information contained in the composite video signal.

According to the present invention this object is achieved by the provision of a frequency detecting circuit which is arranged to receive at least line synchronising information included in the raster synchronising information of a composite video signal when supplied to the said input terminal, and is so coupled to the said means for producing scanning raster signals as to determine the shape and/or size of the resultant raster in dependence upon the response of the frequency detecting circuit to the synchronising information received thereby.

0004798

The frequency detecting circuit may be arranged to receive substantially the composite video signal.

In a preferred embodiment of the invention which provides the possibility of two different formats for displayed information, the frequency detecting circuit is a phase locked loop tone decoder connected to receive the composite video signal and such as to produce a binary output signal having one of its binary values whenever the composite video signal contains a frequency within the acquisation bandwidth of the tone generator and having the other of its binary values whenever the composite video signal does not contain such a frequency. The said frequency is the line frequency conveyed in the form of the repetition rate of the line synchronising pulses in the composite video signal when the composite video signal is conveying video information, i.e. information to be displayed, in a first one of two predetermined formats which differ in that dimension which determines the length of the raster lines. Thus with equal rates of alphanumeric character data transmission and equal rates of repetition of the raster i.e. frame rates in the respective composite video signals, the two predetermined formats provide respective rectangular arrays of such characters in which the number of characters in each row of one array differs from the number of characters in each row of the other array. For example, one format may have an array of 80 columns by 64 rows, and the other format may have an array of 160 columns by 32 rows. In this example, each row of both arrays consists of the same number of raster lines, e.g. 13 lines, but each row of the 160 by 32 format takes twice as long to complete as each row of the 80 by 64 format. The binary output signal of the tone generator is supplied to a plurality of switches to determine the respective states of these switches which are arranged to determine the values of respective electrical characteristics of elements of the circuitry which constitutes the means for producing scanning raster signals and thus the said binary output signal determines the shape of the resultant raster in dependence upon the prevailing binary value of the said binary output signal which constitutes the response of the tone generator to the line synchronising information received thereby.

Other embodiments can be constructed in which the format may be any one of a plurality, greater than two, of different formats. For example, the format may be in any of the three formats 80 columns by 64 rows, 160 columns by 32 rows and 80 columns by 32 rows.

Where more than two frequencies in the composite video signal must be distinguished in order to establish the desired format, an embodiment may be provided with a frequency detecting circuit comprising a plurality of phase locked loop tone generators each tuned to a different frequency so that where there are N such generators, (N+1) different frequencies can be distinguished and respective binary output signals provided by the generators utilized to switch the raster signal circuitry into the appropriate states for producing rasters suitable for (N+1) different formats.

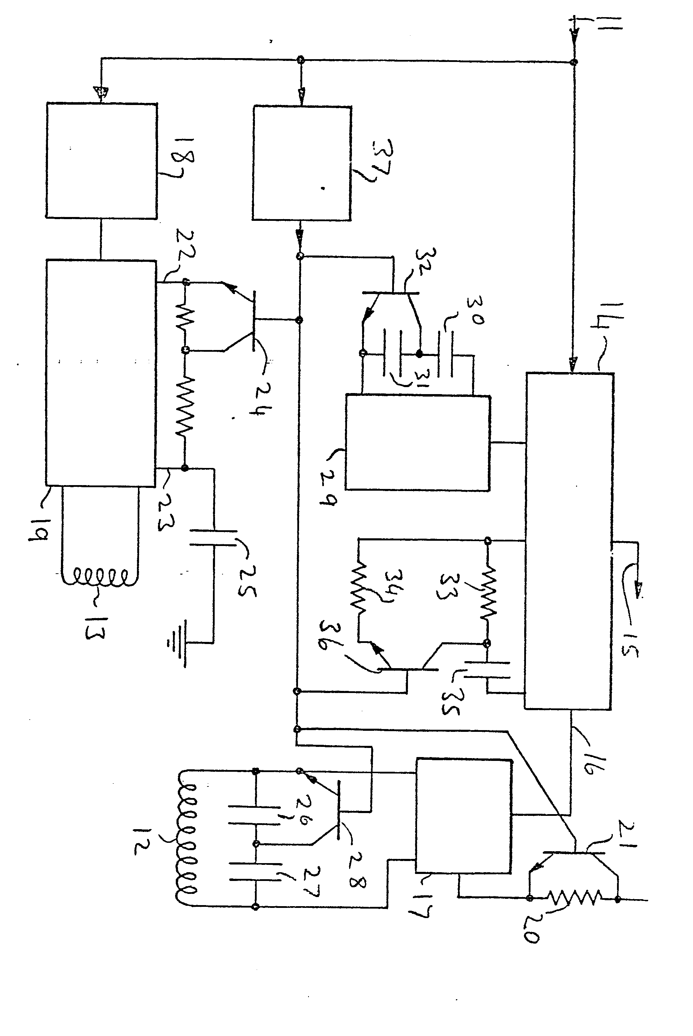

The invention will now be described in more detail, solely by way of example, with reference to the accompanying drawing in which the sole figure is a circuit diagram, partly in block form, of an embodiment of the invention.

In the drawing there is shown video display control apparatus for use with a cathode ray display tube (not shown). The apparatus includes an input terminal 11 for a composite video signal conveying line and frame synchronising pulses and video information in the form of signals representing display dots. Successive groups of 13 lines represented by the composite video signal contain video information corresponding to successive rows of alphanumeric characters, each character being formed by a selection from a dot matrix 13 dots high and 10 dots wide. The apparatus further includes means for producing from the composite video signal scanning raster signals in the form of currents in a line deflection coil 12 and a frame deflection coil 13.

The input terminal 11 is connected to a sync separating circuit 14 having a video output terminal 15 at which separated video information signals are produced and a line sync output terminal 16 at which separated line sync pulses are produced. The terminal 16 is connected to a line output circuit 17 having the line deflection coil 12 coupled to its output terminals.

The length of the lines of the raster, i.e. the width of the raster, has either one of two values depending upon whether or not a resistor 20 connected to the line output circuit 17 is short-circuited or not by a switching transistor 21. The height of the raster has either one of two values depending upon which of values of resistance is presented to the frame output circuit 19 between two terminals 22 and 23 thereof. The two values of resistance are determined by the switching of a switching resistor 24 connected in parallel with one of two series connected resistors coupling the terminals 22 and 23 together. These two resistors form with a capacitor 25 which couples the terminal 23 to ground the time constant circuit of the frame output circuit 19.

The line deflection coil 12 is tuned by capacitance provided by two series connected capacitors 26 and 27 connected in parallel therewith. A switching transistor 28 is connected in parallel with the capacitor 26 so that the tuning capacitance can be set to either one of two values.

A free running line oscillator 29 is coupled to the separating circuit 14 and operates at either one of two frequencies in dependence upon whether one capacitor 30 is connected thereto or two capacitors consisting of the capacitor 30 and another capacitor 31 in series therewith are connected thereto. A switching transistor 32 determines whether or not the capacitor 31 is short-circuited.

Phasing of the output signal at the terminal 16 of the separating circuit 14 is determined by a resistance-capacitance network consisting of two resistors 33 and 34 and a capacitor 35 connected as shown with a switching transistor 36 determining whether or not the resistor 34 is connected in parallel with the resistor 33.

The states, i.e. open or closed, of the switching transistors 21, 24, 28, 32 and 36 are set by a binary signal which is the output of a phase locked loop tone generator 37 which is connected to the input terminal to receive the composite video signal and has an acquisition, i.e. capture, bandwidth which includes one but not the other of two line frequencies which may be conveyed by the composite video signal supplied in operation to the input terminal 11.

The tone generator 37 in the present example is tuned to 20 kilohertz and has a 2% acquisition bandwidth.

One value of the binary output signal of the tone generator 37 so sets the states of transistors 21, 24, 28, 32 and 36 so that the raster of the display has a size and shape suitable for an array of 80 columns by 64 rows, and the other value of the binary output signal so sets these transistors that the raster has a different shape but substantially the same size and is suitable for an arry of 160 columns by 32 rows.

## CLAIMS

1.      Video display control apparatus for use with a visual display device employing a television-type raster, the control apparatus including an input terminal for a composite video signal conveying raster synchronising information and video information, and means for producing scanning raster signals from composite video signals supplied to the said input terminals, characterised in that a frequency detecting circuit (37) is arranged to receive at least line synchronising information included in the raster synchronising information of a composite video signal when supplied to the said input terminal (11), and is so coupled to the said means (12,13, 17,18,19) for producing scanning raster signals as to determine the shape and/or size of the resultant raster in dependence upon the response of the frequency detecting circuit (37) to the synchronising information received thereby.

2.      Apparatus according to claim 1, wherein the frequency detecting circuit is a phase locked loop tone generator (37) connected to receive the composite video signal and such as to produce a binary output signal having one of its binary values whenever the composite video signal contains a frequency within the acquisition bandwidth of the tone generator (37) and having the other of its values whenever the composite video signal does not contain such a frequency.

3.      Apparatus according to claim 2, wherein the tone generator (37) is arranged to supply its output signal to a plurality of switches (21,24,28, 32,36) to determine the respective states of these switches which are arranged to determine the values of respective electrical characteristics of elements (20,22-23,26-27,30-31,33-34) of the circuitry of the said means (12,13,17,18,19).

0004798